# EUROPEAN PATENT SPECIFICATION

(11) **EP 2 473 557 B1**
(45) Date of publication and mention of the grant of the patent: **25.02.2015**
(21) Application number: 10752381.3
(22) Date of filing: 02.09.2010
(51) Int. Cl.: C08J 5/24, B32B 5/24, B32B 5/28

(54) **IMPROVEMENTS IN COMPOSITE MATERIALS**
VERBESSERTE VERBDUNSTOFFE
AMÉLIORATIONS SE RAPPORTANT À DES MATÉRIAUX COMPOSITES

(30) Priority: 04.09.2009 GB 0915366
(43) Date of publication of application: 11.07.2012
(73) Proprietor: Hexcel Composites, Ltd., Duxford Cambridge CB2 4QD (GB)
(72) Inventor: CAWSE, John, Cambridgeshire (GB); SIMMONS, Martin, Hertfordshire (GB)
(74) Representative: Pols, Ronald Maarten
(86) International application number: PCT/GB2010/051452
(87) International publication number: WO 2011/027160

(56) References cited:
- EP-A1- 2 053 078
- WO-A1-2008/056123
- JP-A- 8 034 864
- RU-A- 2003 137 750

## Description

### Technical Field

The present invention relates to improvements in the electromagnetic response of composite materials, particularly to providing improved resistance to damage caused by lightning strikes.

### Background

Composite materials have well-documented advantages over traditional construction materials, particularly in providing excellent mechanical properties at very low material densities. As a result, the use of such materials is becoming increasingly widespread and their fields of application range from "industrial" and "sports and leisure" to high performance aerospace components.

Prepregs, comprising a fibre arrangement impregnated with resin such as epoxy resin, are widely used in the generation of such composite materials. Typically a number of plies of such prepregs are "laid-up" as desired and the resulting laminate is cured, typically by exposure to elevated temperatures, to produce a cured composite laminate.

A common composite material is made up from a laminate of a plurality of prepreg fibre layers, e.g. carbon fibres, interleafed with resin layers. Although the carbon fibres have some electrical conductivity, the presence of the interleaf layers means that this is only exhibited in the composite in the plane of the laminate. The electrical conductivity in the direction orthogonal to the surface of the laminate, the so-called z-direction, is low.

This lack of conductivity in the z-direction is generally accepted to contribute to the vulnerability of composite laminates to electromagnetic hazards such as lightning strikes. A lightning strike can cause damage to the composite material which can be quite extensive, and could be catastrophic if occurring on an aircraft structure in flight. This is therefore a particular problem for aerospace structures made from such composite materials.

Additionally composites for use in aerospace applications must meet exacting standards on mechanical properties. Thus, any improvements in conductivity must not impact negatively on mechanical properties.

A wide range of techniques and methods have been suggested in the prior art to provide lightning strike protection to such composite materials, typically involving the addition of conductive elements at the expense of increasing the weight of the composite material.

In WO 2008/056 123 significant improvements have been made in lightning strike resistance, without significantly increasing weight or affecting mechanical properties, by including metallic conductive particles in the resin interleaf layers so that they contact the adjacent fibre layers and create an electrical pathway in the z-direction.

EP 2053078 A1 teaches a prepreg comprising conductive particles and thermoplastic particles. There is a strong preference for metal or metal-coated conductive particles.

However, introducing metal into prepregs has been found to be undesirable due to the possibility of corrosion effects, explosion hazards and differences in the coefficient of thermal expansion of the materials.

### Summary of the Invention

According to the invention there is provided a prepreg, cured composite laminate, aircraft body structure or process for manufacturing a prepreg as defined in any one of the accompanying claims.

The invention relates to a curable prepreg comprising a structural layer of conductive fibres and a first outer layer of thermosetting resin, the resin layer comprising thermoplastic particles and glassy carbon particles.

The inventors have discovered that glassy carbon particles in the first outer layer have the effect that, when a plurality of such prepregs are stacked together, producing a prepreg stack comprising a plurality of layers of conductive fibres separated by resin interleaf layers, a high conductivity in the z-direction is obtained whilst also retaining the excellent mechanical properties provided by the interleaf structure. Additionally, as the conductive particles are not metallic the problems associated with the use of metal in the prior art are overcome.

It is believed that the excellent mechanical properties provided by the interleaf structure are due to its laminar arrangement. The glassy carbon particles are located in the interleaf layers and act so as to provide an electrical connection between adjacent layers of conductive fibres. Thus, preferably at least 90 wt% of the glassy carbon particles are located in the outer resin layer or resin interleaf layer if a stack of such prepregs is formed.

Thus, in another aspect, the invention also relates to a prepreg stack, comprising a plurality of prepregs as defined herein and thereby comprising a plurality of structural layers of conductive fibres and a plurality of resin interleaf layers formed by the first outer layer.

For example, such a stack may comprise from 4 to 200 structural layers with a corresponding number of resin layers. Suitable interleaf structures are disclosed in EP 0274899.

In a preferred embodiment, the prepreg comprises a second outer resin layer, forming the face of the prepreg not formed by the first outer layer. The second outer layer will usually be the same composition as the first outer layer and preferably be the same thickness as the first outer layer. In this embodiment, a first and second outer layer combine to become the interleaf layer when a plurality of such prepregs are stacked together.

Such interleaf layers preferably have a mean thickness of from 15 to 50 micrometers. If the prepreg comprises only a first outer layer of resin then this forms the entire interleaf layer in the prepreg stack and so it too preferably has a mean thickness of from 15 to 50 micrometers. If the prepreg has both a first and second outer layer of resin then they combine to form the interleaf layer and therefore the combined thickness of the first and second outer resin layer is from 15 to 50 micrometers.

Once formed, a prepreg stack is cured by exposure to elevated temperature and optionally elevated pressure, to produce a cured laminate. Known methods of curing may be employed such as the vacuum bag, autoclave or press cure methods.

The thermoplastic particles provide toughness to the resulting laminate and can be made from a wide range of materials such as polyamides, copolyamides, polyimides, aramids, polyketones, polyetheretherketones, polyarylene ethers, polyesters, polyurethanes and polysulphones. Preferably the thermoplastic particles comprise polyamide. Preferred materials include polyamide 6, polyamide 6/12 and polyamide 12.

The thermoplastic particles may be present in a wide range of levels, however it has been found that a level of from 5 to 20% based on the total resin in the prepreg, preferably from 10 to 20% is preferred. Preferably at least 90 wt% of the thermoplastic particles are located in the outer resin layer or resin interleaf layer if a stack of such prepregs is formed.

The thermoplastic particles may be spherical or non-spherical, porous or non-porous. However, porous non-spherical, even irregular, toughener particles have been shown to provide good results, particularly with impact toughness. For example particles with a sphericity of from 0.5 to 0.9 are preferred.

Sphericity is a measure of how spherical a particle is. It is the surface area of a sphere having the same volume as the particle divided by the surface area of the particle. Thus, for spherical particles the sphericity is 1. It can be shown to be given by ψ = (6Vp)^{2/3}π^{1/3}/Ap, where Vp is the particle volume and Ap is the particle surface area.

Another convenient measure of particle shape is the aspect ratio. This is defined herein as the ratio of the largest cross-sectional diameter to the smallest cross-sectional diameter. Thus a spherical particle will have an aspect ratio of 1:1. The thermoplastic particles preferably have an aspect ratio of from 3:1 to 1.2:1.

Preferably the thermoplastic particles have a d50 mean particle size of from 5 to 50 micrometers, preferably from 10 to 30 micrometers.

Carbon comes in many forms, such as graphite flakes, graphite powders, graphite particles, graphene sheets, fullerenes, carbon black and carbon nanofibres. However, only the glassy (or vitreous) carbon particles are suitable for use in the invention. Glassy carbon is typically non-graphitizable and is at least 70% sp2 bonded, preferably at least 80%, more preferably at least 90% and most preferably essentially 100% sp2 bonded.

Glassy carbon particles are very hard and do not disintegrate during blending operations with the resin. The glassy carbon particles have very low or zero porosity and are solid throughout and are not hollow. Hollow particles, although lighter, can compromise the mechanical properties of the composite by introducing voids.

The glassy carbon particles are intended to bridge between adjacent layers of fibre layers. However, too many such particles can negatively impact the mechanical properties of the resulting laminate. Thus the glassy carbon particles are present at a level of from 0.3 to 2.0 wt % based on the total resin in the prepreg, preferably from 0.5 to 1.5 wt %, more preferably from 0.5 to 1.0 wt %.

Preferably the glassy carbon particles have a d50 mean particle size of from 10 to 50 micrometers, more preferably from 20 to 40 micrometers.

It has been found that a particularly narrow particle size distribution is particularly advantageous, and therefore preferably at least 50 wt % of the glassy carbon particles are within 5 micrometers of the mean particle size.

The glassy carbon particles may be spherical or non-spherical. However spherical glassy carbon particles have been found to provide excellent conductivity and good particle strength. For example, particles with a sphericity of at least 0.95 are preferred. In other terms the glassy carbon particles preferably have an aspect ratio of less than 1.1:1.

In order for the glassy carbon particles to provide a bridging function, the ratio of the mean particle size of the carbon particles to the mean interlayer thickness is from 0.9:1 to 1.5:1, more preferably from 1:1 to 1.3:1.

It has been found that the ratio between the quantities of thermoplastic particles and glassy carbon particles is important for achieving both good conductivity and good toughness. Thus, preferably the weight ratio of thermoplastic particles to glassy carbon particles is preferably from 3:1 to 50:1, more preferably from 3:1 to 40:1, most preferably from 5:1 to 30:1, still more preferably from 8:1 to 20:1.

The fibres in the structural fibre layers may be uni-directional, fabric form or multiaxial. Preferably the fibres are uni-directional and their orientation will vary throughout the prepreg stack and/or laminate, for example by arranging for the fibres in neighbouring layers to be orthogonal to each other in a so-called 0/90 arrangement, signifying the angles between neighbouring fibre layers. Other arrangements such as 0/+45/-45/90 are of course possible among many other arrangements.

The fibres may comprise cracked (i.e. stretch-broken), selectively discontinuous or continuous fibres.

The conductive fibres may be made from a wide variety of materials such as metallised glass, carbon, graphite, metallised polymers and mixtures thereof. Carbon fibres are preferred.

The thermosetting resin may be selected from those conventionally known in the art, such as resins of phenol-formaldehyde, urea-formaldehyde, 1,3,5-triazine-2,4,6-triamine (melamine), bismaleimide, epoxy resins, vinyl ester resins, benzoxazine resins, polyesters, unsaturated polyesters, cyanate ester resins, or mixtures thereof. Particularly preferred are epoxy resins, for example monofunctional, difunctional or trifunctional or tetrafunctional epoxy resins. Preferred difunctional epoxy resins include diglycidyl ether of bisphenol F (e.g. Araldite GY 281), diglycidyl ether of bisphenol A, diglycidyl dihydroxy naphthalene and mixtures thereof. A highly preferred epoxy resin is a trifunctional epoxy resin having at least one meta-substituted phenyl ring in its backbone, e.g. Araldite MY 0600. A preferred tetrafunctional epoxy resin is tetraglycidyl diamino diphenylmethane (e.g. Araldite MY721). A blend of di- and trifunctional epoxy resins is also highly preferred.

The thermosetting resin may also comprise one or more curing agents. Suitable curing agents include anhydrides, particularly polycarboxylic anhydrides; amines, particularly aromatic amines e.g. 1,3-diaminobenzene, 4,4'-diaminodiphenylmethane, and particularly the sulphones, e.g. 4,4'-diaminodiphenyl sulphone (4,4' DDS), and 3,3'-diaminodiphenyl sulphone (3,3' DDS), and the phenol-formaldehyde resins. Preferred curing agents are the amino sulphones, particularly 4,4' DDS and 3,3' DDS.

Further examples of the type and design of the resin and fibres can be found in WO 2008/056123.

The prepregs according to the invention are typically manufactured by bringing a layer of structural fibres into contact with one or more layers of resin, typically at an elevated temperature so that the resin flows into the interstices between the fibres and impregnates them.

In one embodiment, a mixture of resin and the thermoplastic particles and glassy carbon particles is prepared. This mixture is then made into sheet form and brought into contact with one or both of the faces of the structural fibres. Due to the size of the particles, they do not impregnate the fibres with the resin and are instead filtered to remain in an external resin layer. As this involves only one resin application step, this process is termed a one-stage process.

In another embodiment, resin without the particles is made into sheet form and brought into contact with one or both of the faces of the structural fibres. This resin impregnates the fibres and leaves little or none on the external faces. Subsequently resin containing the thermoplastic particles and glassy carbon particles is brought into contact with one or both faces of the impregnated structural fibres. This mixture remains on the outside face and does not further impregnate the fibres. As two resin application steps are involved, this process is termed a two-stage process.

The two-stage process is preferred as it tends to provide a more well-ordered laminate due to the particles not disrupting the fibres. This can result in superior mechanical properties.

It is further preferred that the two-stage process is applied to a prepreg with both first and second outer layers of resin. In this embodiment, two layers of resin are brought into contact with the two faces of the structural fibres. The resin impregnates the fibres and leaves little or none on the external faces. Subsequently, resin containing the thermoplastic particles and glassy carbon particles is brought into contact with both faces of the impregnated structural fibres. This process is referred to as a four-film process as four films of resin are applied.

The present invention is particularly suitable for applications in the aerospace industry, particularly in the formation of aircraft body panels.

As well as lightning strike resistance, it is also desirable to reduce or prevent a phenomenon known as "edge glow" following a lightning strike. This is caused by a build up of electrical charge at the ends of a composite structure and can become a source of ignition.

It has been found that composite materials for use in aircraft body structures can suffer from such edge glow problems. This is a particularly hazardous problem if composite materials are intended to form part of a fuel tank construct.

Thus, the invention is ideally suited to provide a cured laminate composite component of an aircraft fuel tank construct.

The invention will now be illustrated by way of example and with reference to the following figures, in which
Figure 1 is an image of a cross-section through a cured composite laminate according to the present invention.
Figure 2 is an image of a cross-section through another cured composite laminate according to the present invention.
Figure 3 is an image of a cross-section through a further cured composite laminate according to the invention.

### Examples

Rolls of prepreg (10 m x 0.3 m) with different amounts and types of carbon particles were manufactured. One prepreg with no glassy carbon was included for comparison.

Seven resistance panels in the form of 12 ply laminates were produced using 0/90 lay-up and cured at 180° C for 2 hours in an autoclave at 3 bar pressure. Table 1 below shows resistance results of prepreg containing the carbon microspheres, and one containing zero microspheres for comparison. Resistance was measured by cutting square samples from the panel (35 mm x 35 mm) and coating each square side with gold. Electrodes were placed on the coated samples and then using a power source to provide a current (A) the voltage was determined. Resistance was calculated using Ohm's Law (R = V/I).

**Table 1**

| Material (weight %) | 1 | 2 | 3 | 4 | 5 | 6 | 7 | 8 |
|---|---|---|---|---|---|---|---|---|
| Araldite MY0600 (trifunctional epoxy resin) | 27.96 | 27.92 | 27.85 | 27.71 | 27.85 | 27.71 | 27.85 | 27.00 |
| Araldite GY281 (difunctional epoxy resin) | 24.78 | 24.74 | 24.68 | 24.56 | 24.68 | 24.56 | 24.68 | 24.80 |
| PES 5003P (toughener) | 15.00 | 14.97 | 14.93 | 14.85 | 14.93 | 14.85 | 14.93 | 15.01 |
| Orgasol DNatl 1002D (toughener particles) | 13.48 | 13.46 | 13.43 | 13.36 | 13.43 | 13.36 | 13.43 | 13.50 |
| 4,4'diaminodiphenylsulphone (aromatic curing agent) | 18.68 | 18.66 | 18.61 | 18.52 | 18.61 | 18.52 | 18.61 | 18.70 |
| First type carbon particles | 0.10 | 0.25 | 0.50 | 1.00 | - | - | - | - |
| Second type carbon particles | - | - | - | - | 0.50 | 1.00 | - | - |
| Third type carbon particles | - | - | - | - | - | - | 0.50 | - |
| Resistance Ω | 1.30 | 0.63 | 0.35 | 0.28 | 1.36 | 1.11 | 0.40 | 7.5 |

Araldite MY 0600 and GY 281 are available from Huntsman, UK. PES 5003P is available from Sumitomo. Orgasol DNat1 1002D is available from Arkema. 4,4' DDS is available from Huntsman, UK.

The first type of carbon particles are 20 to 50µm Type I from Alfa Aesar (USA) and are highly spherical with a sphericity of greater than 0.99 and a d50 average particle size of 30.1 µm. The second type of carbon particles are 20 to 50 µm Sigradur G from HTW Hochtemperatur-Workstoffe GmbH and are irregular with a sphericity of about 0.65 and a d50 average particle size of 29.3 µm. The third type of carbon particles are also 20 to 50 µm from HTW and are highly spherical with a sphericity of greater than 0.99 and a d50 average particle size of 30.5 µm. The particle size was measured using a Malvern Instruments Mastersizer using a range lens of 300mm and a beam length of 2.40mm.

It can be seen that the laminates comprising the glassy carbon particles show a significant drop in electrical resistance. It is also noticeable that the drop in resistance is more significant for the spherical particles than for the irregular particles. This is believed to be due to fewer contacts being made between adjacent structural layers with the irregular particles.

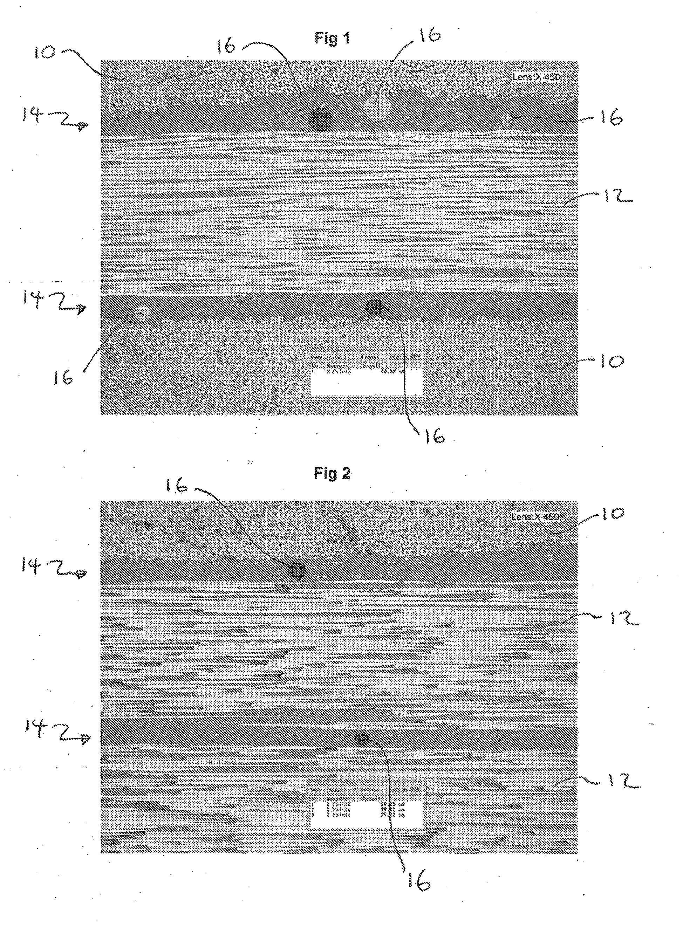

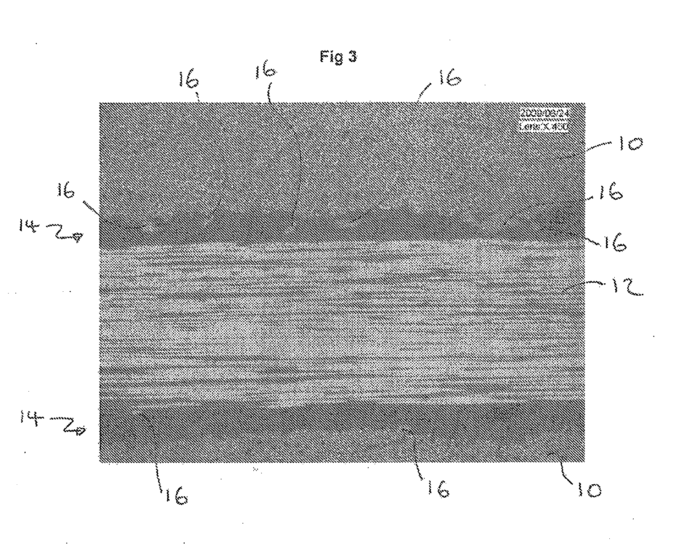

Figures 1, 2 and 3 show a cross-section through the cured laminate according to examples 4, 3 and 6 respectively.

The images show layers of unidirectional carbon fibres aligned into the page 10 and unidirectional carbon fibres aligned across the page 12. Separating the layers of carbon fibre and resin interlayers 14. Dispersed with the resin interlayers 14 are irregular tougher particles. Also dispersed within the interlayer are highly spherical glassy carbon particles 16.

A variety of mechanical tests were carried out on batches made according to examples 3, 7 and comparative example 8. The results are shown below in table 2.

**Table 2**

| **Mechanical Property** | **Comparative Example 8** | **Example 3** | **Example 7** |
|---|---|---|---|
| Glass transition temperature Log E' (°C) (ASTM D7028) | 182.0 | 178.9 | 183.7 |
| Open hole compression QI (MPa) (ASTM D6484/D6484M) | 296 | 300 | 291 |
| Open hole tension directed (MPa) (ASTM D5766) | 794 | 845 | 816 |
| Tensile strength (MPa) (ASTM D3039) | 3227 | 3234 | 3014 |
| Tensile modulus (GPa) (ASTM D3039) | 181.2 | 186.4 | 185.6 |
| GIc (Jm⁻²) (ASTM D5528) | 301.0 | 302.5 | 449 |
| GIIc (Jm⁻²) | 2023 | 2608 | 1440 |
| Interlaminar shear strength (MPa) (ASTM D2344) | 104 | 106 | 92.5* |
| Compression after impact after 30 J (MPa) (ASTM D7137 | 285.4 | 310.4 | 276 |

| | | | |
|---|---|---|---|
| * measured using a different test machine. | | | |

It can be seen that addition of the glassy carbon particles according to the invention does not have a noticeable impact on mechanical properties.

## Claims

1. A curable prepreg comprising a structural layer of conductive fibres and a first outer layer of thermosetting resin, the resin layer comprising thermoplastic particles and glassy carbon particles, wherein the glassy carbon particles are present at a level of from 0.3 to 2.0 wt % based on total resin in the prepreg and wherein a stack of layers of said prepreg comprises a plurality of layers of said conductive fibres separated by said resin interlayers, wherein the ratio of mean particle size of glassy carbon particles to the mean interlayer thickness is from 0.9:1 to 1.5:1.

2. A prepreg according to claim 1, which comprises a second outer resin layer, forming the face of the prepreg not formed by the first outer layer.

3. A prepreg according to claim 1 or claim 2, wherein the total thickness of the first and if present, second, outer resin layers is from 15 to 50 micrometers.

4. A prepreg according to any one of the preceding claims, wherein the thermoplastic particles comprise polyamide.

5. A prepreg according to claim 4, wherein the thermoplastic particles comprise polyamide 6, polyamide 6/12, polyamide 12 or mixtures thereof.

6. A prepreg according to any one of the preceding claims wherein the thermoplastic particles are present at a level of from 5 to 20% based on the total resin in the prepreg, preferably from 10 to 20%.

7. A prepreg according to any one of the preceding claims, wherein the thermoplastic particles have a sphericity of from 0.5 to 0.9.

8. A prepreg according to any one of the preceding claims, wherein the thermoplastic particles have a d50 mean particle size of from 5 to 50 micrometers, preferably from 10 to 30 micrometers.

9. A prepreg according to any one of the preceding claims, wherein the glassy carbon particles are present at a level of from 0.5 to 1.5 wt % based on the total resin in the prepreg, preferably from 0.5 to 1.0 wt %.

10. A prepreg according to any one of the preceding claims, wherein the glassy carbon particles have a d50 mean particle size of from 10 to 50 micrometers, preferably from 20 to 40 micrometers.

11. A prepreg according to any one of the preceding claims, wherein at least 50 wt % of the glassy carbon particles are within 5 micrometers of the mean particle size.

12. A prepreg according to any one of the preceding claims, wherein the glassy carbon particles have a sphericity of at least 0.95.

13. A prepreg according to any one of the preceding claims, wherein the glassy carbon particles are non-graphitizable.

14. A prepreg according to any one of the preceding claims, wherein the weight ratio of thermoplastic particles to glassy carbon particles is 3:1 to 50:1, preferably from 3:1 to 40: 1, more preferably from 5:1 to 30:1, still preferably from 8:1 to 20:1.

15. A prepreg according to any one of the preceding claims, wherein the resin comprises a difunctional epoxy resin or a trifunctional epoxy resin having at least one meta-substituted phenyl ring in its backbone.

16. A prepreg according to any one of the preceding claims, wherein the resin comprises an amino sulphone curing agent.

## Patentansprüche

1. Härtbares Prepreg, umfassend eine Strukturschicht aus leitfähigen Fasern und eine erste äußere Schicht aus duroplastischem Harz, wobei die Harzschicht thermoplastische Teilchen und Glaskohlenstoffteilchen umfasst, wobei die Glaskohlenstoffteilchen in einem Anteil von 0,3 bis 2,0 Gew.-%, bezogen auf das gesamte Harz in dem Prepreg, vorliegen und wobei ein Stapel von Schichten des Prepreg mehrere Schichten aus den leitfähigen Fasern, die durch die Harzzwischenschichten getrennt sind, umfasst, wobei das Verhältnis der mittleren Teilchengröße der Glaskohlenstoffteilchen zur mittleren Zwischenschichtdicke 0,9:1 bis 1,5:1 beträgt.

2. Prepreg nach Anspruch 1, das eine zweite äußere Harzschicht umfasst, die die nicht durch die erste äußere Schicht gebildete Außenfläche des Prepreg bildet.

3. Prepreg nach Anspruch 1 oder Anspruch 2, wobei die Gesamtdicke der ersten und, sofern vorhanden, zweiten äußeren Harzschicht 15 bis 50 Mikrometer beträgt.

4. Prepreg nach einem der vorhergehenden Ansprüche, wobei die thermoplastischen Teilchen Polyamid umfassen.

5. Prepreg nach Anspruch 4, wobei die thermoplastischen Teilchen Polyamid 6, Polyamid 6/12, Polyamid 12 oder Mischungen davon umfassen.

6. Prepreg nach einem der vorhergehenden Ansprüche, wobei die thermoplastischen Teilchen in einem Anteil von 5 bis 20%, bezogen auf das gesamte Harz in dem Prepreg, vorzugsweise von 10 bis 20%, vorliegen.

7. Prepreg nach einem der vorhergehenden Ansprüche, wobei die thermoplastischen Teilchen eine Sphärizität von 0,5 bis 0,9 aufweisen.

8. Prepreg nach einem der vorhergehenden Ansprüche, wobei die thermoplastischen Teilchen eine mittlere Teilchengröße d50 von 5 bis 50 Mikrometer und vorzugsweise von 10 bis 30 Mikrometer aufweisen.

9. Prepreg nach einem der vorhergehenden Ansprüche, wobei die Glaskohlenstoffteilchen in einem Anteil von 0,5 bis 1,5 Gew.-%, bezogen auf das gesamte Harz in dem Prepreg, vorzugsweise von 0,5 bis 1,0 Gew.-%, vorliegen.

10. Prepreg nach einem der vorhergehenden Ansprüche, wobei die Glaskohlenstoffteilchen eine mittlere Teilchengröße d50 von 10 bis 50 Mikrometer und vorzugsweise von 20 bis 40 Mikrometer aufweisen.

11. Prepreg nach einem der vorhergehenden Ansprüche, wobei mindestens 50 Gew.-% der Glaskohlenstoffteilchen innerhalb eines Abstands von 5 Mikrometer von der mittleren Teilchengröße liegen.

12. Prepreg nach einem der vorhergehenden Ansprüche, wobei die Glaskohlenstoffteilchen eine Sphärizität von mindestens 0,95 aufweisen.

13. Prepreg nach einem der vorhergehenden Ansprüche, wobei die Glaskohlenstoffteilchen nicht graphitisierbar sind.

14. Prepreg nach einem der vorhergehenden Ansprüche, wobei das Gewichtsverhältnis von thermoplastischen Teilchen zu Glaskohlenstoffteilchen 3:1 bis 50:1, vorzugsweise 3:1 bis 40:1, weiter bevorzugt 5:1 bis 30:1 und noch weiter bevorzugt 8:1 bis 20:1 beträgt.

15. Prepreg nach einem der vorhergehenden Ansprüche, wobei das Harz ein difunktionelles Epoxidharz oder ein trifunktionelles Epoxidharz mit mindestens einem meta-substituierten Phenylring in seiner Hauptkette umfasst.

16. Prepreg nach einem der vorhergehenden Ansprüche, wobei das Harz ein Aminosulfon-Härtungsmittel umfasst.

## Revendications

1. Matériau préimprégné durcissable comprenant une couche structurale de fibres conductrices et une première couche externe de résine thermodurcissable, la couche de résine comprenant des particules thermoplastiques et des particules de carbone vitreux, les particules de carbone vitreux étant présentes à un niveau de 0,3 % à 2,0 % en poids relativement à la quantité totale de résine dans le matériau préimprégné, et une superposition de couches dudit matériau préimprégné comprenant une pluralité de couches desdites fibres conductrices séparées par des couches intermédiaires de ladite résine, et le rapport de la taille de particule moyenne des particules de carbone vitreux contre l'épaisseur moyenne des couches intermédiaires étant de 0,9:1 à 1,5:1.

2. Matériau préimprégné selon la revendication 1, lequel comprend une deuxième couche de résine externe, formant la face du matériau préimprégné qui n'est pas formée par la première couche externe.

3. Matériau préimprégné selon la revendication 1 ou la revendication 2, dans lequel l'épaisseur totale de la première couche de résine externe et de la deuxième couche de résine externe, si celle-ci est présente, est de 15 à 50 micromètres.

4. Matériau préimprégné selon l'une quelconque des revendications précédentes, dans lequel les particules thermoplastiques comprennent un polyamide.

5. Matériau préimprégné selon la revendication 4, dans lequel les particules thermoplastiques comprennent du polyamide 6, du polyamide 6/12, du polyamide 12 ou des mélanges de ceux-ci.

6. Matériau préimprégné selon l'une quelconque des revendications précédentes, dans lequel les particules thermoplastiques sont présentes à un niveau de 5 % à 20 %, préférablement de 10 % à 20 %, relativement à la quantité totale de résine dans le matériau préimprégné.

7. Matériau préimprégné selon l'une quelconque des revendications précédentes, dans lequel les particules thermoplastiques ont une sphéricité de 0,5 à 0,9.

8. Matériau préimprégné selon l'une quelconque des revendications précédentes, dans lequel les particules thermoplastiques ont une taille de particule moyenne d50 de 5 à 50 micromètres, préférablement de 10 à 30 micromètres.

9. Matériau préimprégné selon l'une quelconque des revendications précédentes, dans lequel les particules de carbone vitreux sont présentes à un niveau de 0,5 % à 1,5 % en poids, préférablement de 0,5 % à 1,0 % en poids, relativement à la quantité totale de résine dans le matériau préimprégné.

10. Matériau préimprégné selon l'une quelconque des revendications précédentes, dans lequel les particules de carbone vitreux ont une taille de particule moyenne d50 de 10 à 50 micromètres, préférablement de 20 à 40 micromètres.

11. Matériau préimprégné selon l'une quelconque des revendications précédentes, dans lequel au moins 50 % en poids des particules de carbone vitreux se situent dans une limite de 5 micromètres de la taille de particule moyenne.

12. Matériau préimprégné selon l'une quelconque des revendications précédentes, dans lequel les particules de carbone vitreux ont une sphéricité d'au moins 0,95.

13. Matériau préimprégné selon l'une quelconque des revendications précédentes, dans lequel les particules de carbone vitreux sont non graphitisables.

14. Matériau préimprégné selon l'une quelconque des revendications précédentes, dans lequel le rapport pondéral des particules thermoplastiques contre les particules de carbone vitreux est de 3:1 à 50:1, préférablement de 3:1 à 40:1, plus préférablement de 5:1 à 30:1, encore plus préférablement de 8:1 à 20:1.

15. Matériau préimprégné selon l'une quelconque des revendications précédentes, dans lequel la résine comprend une résine époxyde difonctionnelle ou une résine époxyde trifonctionnelle comportant au moins un cycle phényle méta-substitué dans son squelette.

16. Matériau préimprégné selon l'une quelconque des revendications précédentes, dans lequel la résine comprend un agent de durcissement aminosulfone.
